# EUROPÄISCHE PATENTSCHRIFT

(11) **EP 0 479 955 B1**
(45) Veröffentlichungstag und Bekanntmachung des Hinweises auf die Patenterteilung: **12.04.1995**
(21) Anmeldenummer: 91904373.7
(22) Anmeldetag: 23.02.1991
(51) Int. Cl.: F16L 55/128, B60T 8/36

(54) **VENTILBLOCK, INSBESONDERE FUR SCHLUPFGEREGELTE BREMSANLAGEN**
VALVE BLOCK, ESPECIALLY FOR SLIP-CONTROLLED BRAKING SYSTEMS
BLOC DE SOUPAPES, EN PARTICULIER POUR SYSTEMES DE FREINAGE A DISPOSITIF D'ANTIPATINAGE

(30) Priorität: 27.04.1990 DE 4013481
(43) Veröffentlichungstag der Anmeldung: 15.04.1992
(73) Patentinhaber: ITT Automotive Europe GmbH, 60488 Frankfurt (DE)
(72) Erfinder: BECK, Erhard, D-6290 Weilburg (DE); OTTO, Albrecht, D-6450 Hanau-Mittelbuchen (DE)
(86) Internationale Anmeldenummer: EP9100339
(87) Internationale Veröffentlichungsnummer: WO9117383

(56) Entgegenhaltungen:
- DE-A- 3 729 216
- GB-A- 1 327 442

## Beschreibung

Die Erfindung betrifft einen Ventilblock, insbesondere für schlupfgeregelte Bremsanlagen nach dem Oberbegriff der Ansprüche 1 bis 3.

Beispielsweise ist aus der DE-A-37 29 216 ein Ventilblock bekannt, in dessen Ventilblockgehäuse mehrere hydraulische Kanäle eine Verbindung zwischen der Druckmittelzufuhr- und Druckmittelabgabeseite herstellen, wobei einerseits die in dem Ventilblockgehäuse eingesetzten und auf den Ventildomen gehaltenen Magnetventile als Stellelemente wirken, andererseits die das Ventilblockgehäuse vollständig durchdringenden Kanäle eine Kugelverstemmung im Sinne der Sperrelemente aufweisen, um die Kanäle zu verschließen.

Als nachteilig erweist sich bei der beschriebenen Kugelverstemmung die verhältnismäßig große Gefahr der Kanalverschmutzung infolge des Spanabriebes bei der Montage des Sperrelementes, bzw. der Kugel. Hierdurch ist eine Beeinträchtigung der Funktion der Magnetventile nicht auszuschließen. Diese Beeinträchtigung führt insbesondere im Falle einer Bremsschlupfregelung zu Nachteilen, die zusätzlich zu den Nachteilen auftreten, die durch Verschmutzungen in einem Hydrauliksystem generell gegeben sind.

Die Verschmutzungen können leider nicht vollständig in allen Kanälen durch Spülen des Ventilblocks beseitigt werden. Es muß daher angestrebt werden, Verschmutzungen bei der Montage zu vermeiden. Auch die Verwendung von Königexpander oder äquivalenten Formstopfen können das Problem nicht lösen.

Weiterhin erweist sich das Einsetzen der Ventildome und der zugehörigen Ventilsitze in das Ventilblockgehäuse als problematisch, da auch diese Teile mittels einer oberflächenverletzenden Preßpassung bzw. Verstemmung eingesetzt werden. Dies führt analog zur vorbeschriebenen Kugelverstemmung zu einer Kanalverschmutzung.

Aus der GB-A-1 327 442 ist bereits ein Verfahren zur Befestigung eines Hohlkörpers mittels Formgedächtnislegierung bekannt geworden, sowie ein Hohlkörper aus einer solchen Formgedächtnislegierung, der zur Befestigung von Rohren geeignet ist. Der als Verbindungsstück ausgeführte Hohlkörper weist mehrere in seinen Hohlraum gerichtete, hakenförmige,mit den zu verbindenden Rohren in Eingriff bringbare Zähne auf, die sich ausbilden, sobald die Umwandlungstemperatur der Formgedächtnislegierung erreicht ist. Das Verbindungsstück ist an beiden Endbereichen verjüngt, so daß an diesen Stellen verringerte Haltekräfte auf die beiden Rohre einwirken. Die beiden Rohre halten innerhalb des Verbindungsstücks einen Abstand voneinander ein.

Daher ist es die Aufgabe der vorliegenden Erfindung, einen Ventilblock der eingangs genannten Gattung zu schaffen, der unter Umgehung der vorgenannten Nachteile eine verbesserte Befestigung der in das Ventilblockgehäuse eingesetzten Teile ermöglicht, ohne die Funktionsfähigkeit der Anlage, beispielsweise durch Oberflächenabrieb, zu gefährden.

Die Aufgabe wird erfindungsgemäß durch die kennzeichnenden Merkmale der Patentansprüche 1 bis 3 gelöst.

Hierdurch ist es möglich, daß die sich im martensitischen Zustand befindlichen, in das Ventilblockgehäuse einzusetzenden Teile bei Erwärmung über die Starttemperatur des Austenits einen irreversiblen Formzustand einnehmen, der einen sicheren Kraftschluß im Ventilblockgehäuse gewährleistet. Am Beispiel des als Sperrelementes ausgeführten Kugelverschlusses im Kanal des Ventilblockgehäuse ergeben sich beträchtliche Druckkräfte, die infolge der Austenitbildung für einen unlösbaren, festen Sitz des Kugelkörpers im Kanal sorgen.

Als besonders vorteilhaft erweist sich für die technische Anwendung die Einsatzteile des Ventilblockes mit einer Formgedächtnis-Legierung aus Nickel und Titan zu versehen, wobei in Abhängigkeit von der gewichtsprozentualen Zusammensetzung der intermetallen Verbindung eine erhebliche Beeinflussung der Austenit-Starttemperatur und damit der Umwandlungstemperatur im weiten Bereich, beispielsweise minus 100 Grad Celsius bis plus 100 Grad Celsius, anwendungsgerecht möglich ist. Weiterhin besitzen binäre Formgedächtnis-Legierungen eine hervorragende Korrosionsbeständigkeit.

Die weitere Ausgestaltung des Erfindungsgedankens sieht vor, die binäre Legierung der Teile im Ventilblock mittels speziellen thermodynamischen Prozessen in ihrer Hysterese zu erweitern, um nach der Tieftemperaturformgebung eine vereinfachte Bereitstellung bei normalen Raumtemperaturen zum Zwecke der vereinfachten Montage der Kugel, des Ventilsitzes und des Ventildoms zu realisieren.

Alternativ sieht die Erfindung vor, eine kryogene Formgedächtnis-Legierung zu verwenden, die im Hinblick auf die hohen Dicht- und Haltekräfte der in das Hydraulikaggregat einzufügenden Teile hohe Austenitfestigkeit und vorbildliche Befestigungskräfte in einem Temperaturbereich von beispielsweise minus 60 bis plus 300 Grad Celsius gewährleistet.

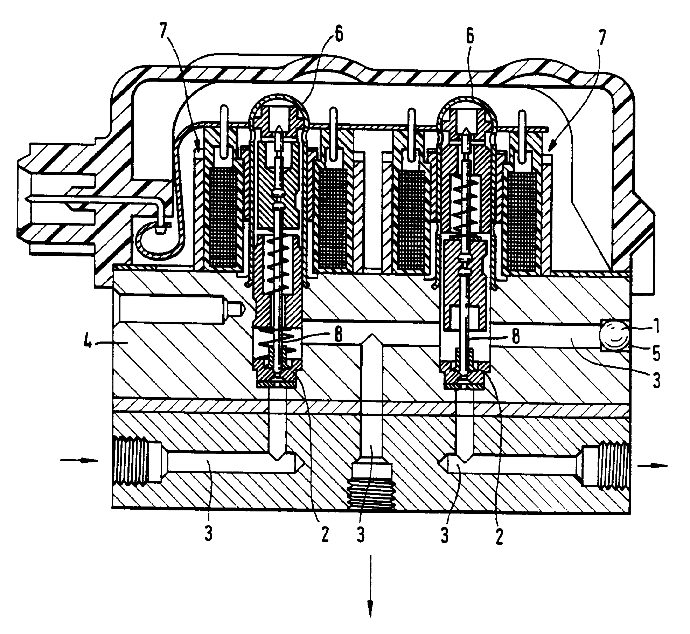

Weitere Merkmale, Vorteile und Anwendungsmöglichkeiten gehen aus der nachfolgenden Beschreibung eines Ausführungsbeispieles (Fig. 1) hervor.

Fig. 1 zeigt
im Querschnitt exemplarisch eine Ausführungsform zur Steuerung und/oder Regelung von Fluiden, innerhalb eines Ventilblockes, dessen Ventilblockgehäuse 4 von mehreren Kanälen 3 durchdrungen ist. Die in der Abbildung rechts als Sperrelement angeordnete Kugel 1 verschließt das Kanalende 5, während im weiteren Verlauf des selben Kanals 3, die Ventilsitze 2 der Magnetventile 7 in Abhängigkeit eines elektrischen Stromimpulses die Druckmittelverteilung zwischen dem Druckmittelzulauf und Druckmittelrücklauf steuern.

Gemäß dem Erfindungsgedanke ist zumindest die das Kanalende verschließende Kugel 1 wie auch die unterhalb den Ventilstößeln 8 angeordneten Ventilsitze 2 mit einer Formgedächtnis-Legierung versehen, die bei den üblichen Betriebstemperaturen den kraftschlüssigen Halt im Ventilblockgehäuse 4 erzeugt. Die Voraussetzung zur temperaturabhängigen Form- und Kraftentfaltung an den einzusetzenden Teilen 1,2,6 erfordert den Austenitzustand des Gefüges. Des weiteren muß die Martensitstarttemperatur unterhalb der minimalen Betriebstemperatur liegen. Folglich ist für das aufgezeigte Beispiel die binäre oder tertiäre Formgedächtnis-Legierung der Kugel 1, der Ventildome 6 und der Ventilsitze 2 für einen Temperaturbereich von etwa minus 40 Grad Celsius bis 120 Grad Celsius auszulegen, weshalb kryogene Legierungen oder die kostengünstigere Legierungen mit erweiterter Hysterese zu bevorzugen sind.

Bei Verwendung einer Legierung mit erweiterten Formgedächtnis erfolgt die Verformung der Kugel 1, der Ventildome 6 und der Ventilsitze 2 zunächst im martensitischen Zustand und ist danach im Ventilblockgehäuse 4 zur Montage auf Werte oberhalb der Austenitstarttemperatur, damit über 80 Grad Celsius zu erwärmen, so daß die austenitische Gefügeumwandlung bei gleichzeitiger, erheblicher Gestaltsänderung ablaufen kann. Die Teile 1,2,6 bleiben sodann im austenitischen Zustand, ohne in die ursprüngliche Gestalt zurückzukehren. Als Ergebnis der austenitischen Gefügeumwandlung wird in der Kugel 1, in den Ventildomen 6, und in den Ventilsitzen 2 eine aus der Gestaltsänderung resultierende mechanische Spannung aufgebaut, die erhebliche Kräfte erzeugt, um die sichere Befestigung der in das Ventilblockgehäuse 4 eingesetzten Teile 1,2,6 zu gewährleisten.

Da die Kugel 1, die Ventildome 6 und die Ventilsitze 2 im martensitischen Zustand eine Spielpassung gegenüber dem Ventilblockgehäuse 4 aufweisen, ist die Verletzung der Körperoberflächen während der Montage ausgeschlossen, womit Oberflächenabrieb oder gar Spanansammlung in den Kanälen 3 vermieden ist.Als weiterer Vorteil entfällt die erforderliche Korrosionsschutzbehandlung nach der Kugelmontage, da binäre Formgedächtnislegierungen äußerst korrosionsbeständig sind.

Die in diesem speziellen Beispiel lediglich auf den Kanalverschluß und die Magnetventile angewandte Formgedächtnislegierung ist ebenso auf eine Vielzahl weiterer Anwendungsmöglichkeiten in der Bremshydraulik, z.B. auch für Anschlußstutzenbefestigungen im Ventilblock übertragbar, die wegen ihrer Analogie keinen besonderen Anspruch auf detaillierte Darstellungen erheben können.

### Bezugszeichenliste

1 Kugel (eingesetztes Teil)
2 Ventilsitz (eingesetztes Teil)
3 Kanal
4 Ventilblockgehäuse
5 Kanalende
6 Ventildom (eingesetztes Teil)
7 Magnetventil
8 Ventilstößel

## Patentansprüche

1. Ventilblock, insbesondere für schlupfgeregelte Bremsanlagen, mit mehreren in einem Ventilblockgehäuse (4) eingesetzten Ventildomen (6) und Ventilsitzen (2) zur Aufnahme der zugehörigen Magnetspulen und der Ventilstößel (8), sowie mit mehreren das Ventilblockgehäuse (4) durchdringenden Druckmittelkanälen (3), in die Verschlußelemente eingesetzt sind, dadurch **gekennzeichnet**, daß mindestens ein in das Ventilblockgehäuse (4) eingesetztes Teil ein Sperrelement (1) ist, das den Druckmittelkanal (3) des Ventilblockgehäuses (4) verschlossen hält, und daß das Sperrelement (1) eine Formgedächtnis-Legierung aufweist, so daß bei einer Temperatur größer als die Austenit-Starttemperatur eine kraft- und/oder formschlüssige Befestigung des in das Ventilblockgehäuse (4) eingesetzten Sperrelementes (1) herstellbar ist.

2. Ventilblock, insbesondere für schlupfgeregelte Bremsanlagen, mit mehreren in einem Ventilblockgehäuse (4) eingesetzten Ventildomen (6) und Ventilsitzen (2) zur Aufnahme der zugehörigen Magnetspulen und der Ventilstößel (8), sowie mit mehreren das Ventilblockgehäuse (4) durchdringenden Druckmittelkanälen (3), in die Verschlußelemente eingesetzt sind, dadurch **gekennzeichnet**, daß mindestens ein in das Ventilblockgehäuse (4) eingesetztes Teil ein Ventildom (6) ist, und daß der Ventildom (6) eine Formgedächtnis-Legierung aufweist, die aus einer intermetallen Verbindung mit vorzugsweise unterdrücktem Formgedächtnis hergestellt ist, so daß bei einer Temperatur größer als die Austenit-Starttemperatur eine kraft- und/oder formschlüssige Befestigung des in das Ventilblockgehäuse (4) eingesetzten Ventildoms (6) herstellbar ist.

3. Ventilblock, insbesondere für schlupfgeregelte Bremsanlagen, mit mehreren in einem Ventilblockgehäuse (4) eingesetzten Ventildomen (6) und Ventilsitzen (2) zur Aufnahme der zugehörigen Magnetspulen und der Ventilstößel (8), sowie mit mehreren das Ventilblockgehäuse (4) durchdringenden Druckmittelkanälen (3), in die Verschlußelemente eingesetzt sind, dadurch **gekennzeichnet**, daß ein im Ventilblockgehäuse (4) eingefügtes Teil ein aus einer Formgedächtnislegierung hergestellter Ventilsitz (2) ist, daß bei einer Temperatur größer als die Austenit-Starttemperatur eine kraft- und/oder formschlüssige Befestigung des in das Ventilblockgehäuse (4) eingesetzten Ventilsitzes (2) hergestellt ist.

4. Ventilblock nach mindestens einem der vorhergehenden Ansprüche 1 bis 3, dadurch **gekennzeichnet**, daß die Teile (1,2,6) eine binäre Formgedächtnis-Legierung, vorzugsweise auf Nickel-Titan-Basis, aufweisen.

5. Ventilblock nach Anspruch 4, dadurch **gekennzeichnet**, daß der Nickelgehalt der Legierung maximal 50 Gewichtsprozent, der Titananteil der intermetallen Verbindung maximal 55 Gewichtsprozent nicht überschreitet.

6. Ventilblock nach Anspruch 4, dadurch **gekennzeichnet**, daß die Nickel-Titan-Legierung der Teile (1,2,6) eine erweiterte Hysterese aufweist, so daß die Legierung nach der Montageerwärmung im hochfesten Zustand irreversibel verformt erhalten bleibt.

7. Ventilblock nach einem der vorhergehenden Ansprüche 1 bis 5, dadurch **gekennzeichnet**, daß die Teile (1,2,6) aus einer kryogenen Legierung besteht.

8. Ventilblock nach mindestens einem der vorhergehenden Ansprüche 1 bis 3, dadurch **gekennzeichnet**, daß die Teile (1,2,6) aus einer tertiären intermetallen Verbindung bestehen.

9. Ventilblock nach Anspruch 8, dadurch **gekennzeichnet**, daß die tertiäre intermetalle Verbindung der Teile (1,2,6) aus einer Kupfer- Zink- Aluminium-Legierung gebildet ist.

## Claims

1. A valve block, in particular for slip-controlled brake systems, including a plurality of valve domes (6) and valve seats (2) inserted into a valve block housing (4) to accommodate the associated magnetic coils and valve plungers (8), and including a plurality of pressure fluid passageways (3) extending through the valve block housing (4) and in which closure elements are inserted, **characterized** in that at least one part inserted into the valve block housing (4) is a blocking element (1) which keeps the pressure fluid passageway (3) of the valve block housing (4) closed, and in that the blocking element (1) is formed of a shape memory alloy so that, at a temperature in excess of the austenite starting temperature, a force-locking and/or form-locking fixation of the blocking element (1) inserted into the valve block housing (4) can be established.

2. A valve block, in particular for slip-controlled brake systems, including a plurality of valve domes (6) and valve seats (2) inserted into a valve block housing (4) to accommodate the associated magnetic coils and valve plungers (8), and including a plurality of pressure fluid passageways (3) extending through the valve block housing (4) and in which closure elements are inserted, **characterized** in that at least one part inserted into the valve block housing (4) is a valve dome (6), and in that the valve dome (6) is formed of a shape memory alloy which is made of an intermetal compound having a preferably suppressed shape memory so that, at a temperature in excess of the austenite starting temperature, a force-locking and/or form-locking fixation of the valve dome (6) inserted into the valve block housing (4) can be established.

3. A valve block, in particular for slip-controlled brake systems, including a plurality of valve domes (6) and valve seats (2) inserted into a valve block housing (4) to accommodate the associated magnetic coils and valve plungers (8), and including a plurality of pressure fluid passageways (3) extending through the valve block housing (4) and in which closure elements are inserted, **characterized** in that a part inserted into the valve block housing (4) is a valve seat (2) which is formed of a shape memory alloy, in that, at a temperature in excess of the austenite starting temperature, a force-locking and/or form-locking fixation of the valve seat (2) inserted into the valve block housing (4) is established.

4. A valve block as claimed in at least one of the preceding claims 1 to 3,
**characterized** in that the parts (1, 2, 6) are formed of a binary shape memory alloy which, preferably, is nickel-titanium.

5. A valve block as claimed in claim 4,
**characterized** in that the nickel content of the alloy does not exceed a maximum of 50 percent by weight, while the titanium share of the intermetal compound does not exceed a maximum of 55 percent by weight.

6. A valve block as claimed in claim 4,
**characterized** in that the nickel-titanium alloy of the parts (1, 2, 6) exhibits an extended hysteresis so that the alloy after the assembly heating, in the high-strength condition, is maintained irreversibly deformed.

7. A valve block as claimed in at least one of the preceding claims 1 to 5,
**characterized** in that the parts (1, 2, 6) are formed of a cryogenic alloy.

8. A valve block as claimed in at least one of the preceding claims 1 to 3,
**characterized** in that the parts (1, 2, 6) are composed of a tertiary intermetal compound.

9. A valve block as claimed in claim 8,
**characterized** in that the tertiary intermetal compound of the parts (1, 2, 6) is formed of a copper/zinc/aluminium alloy.

## Revendications

1. Bloc de valves, notamment pour installation de freinage à régulation du glissement, comprenant plusieurs dômes de valve (6) et sièges de valve (2), rapportés dans le boîtier (4) du bloc de valves et servant à loger des bobines excitatrices et des tiges-poussoirs de valve (8) qui leur sont associées, et plusieurs conduits d'agent de pression (3) qui traversent le boîtier (4) du bloc de valves et dans lesquels des éléments d'arrêt sont rapportés, caractérisé en ce qu'au moins une pièce rapportée dans le boîtier (4) du bloc de valves est un élément d'obturation (1) qui maintient obturé le conduit d'agent de pression (3) du boîtier (4) du bloc de valves et en ce que l'élément d'obturation (1) comprend un alliage à mémoire de forme, de sorte qu'à une température supérieure à la température d'austénite commençante, il peut se produire une fixation, sous l'action d'une force ou par complémentarité de formes, de l'élément d'obturation (1) rapporté dans le boîtier (4) du bloc de valves.

2. Bloc de valves, notamment pour installation de freinage à régulation du glissement, comprenant plusieurs dômes de valve (6) et sièges de valve (2), rapportés dans le boîtier (4) du bloc de valves et servant à loger des bobines excitatrices et des tiges-poussoirs de valve (8) qui leur sont associées, et plusieurs conduits d'agent de pression (3) qui traversent le boîtier (4) du bloc de valves et dans lesquels des éléments d'arrêt sont rapportés, caractérisé en ce qu'au moins une pièce rapportée dans le boîtier (4) du bloc de valves est un dôme de valve (6) et en ce que le dôme de valve (6) comprend un alliage à mémoire de forme qui est constitué d'un composé intermétallique possédant une mémoire de forme de préférence réduite, de sorte qu'à une température supérieure à la température d'austénite commençante, il peut se produire une fixation, sous l'action d'une force ou par complémentarité de formes, du dôme de valve (6) rapporté dans le boîtier (4) du bloc de valves.

3. Bloc de valves, notamment pour installation de freinage à régulation du glissement, comprenant plusieurs dômes de valve (6) et sièges de valve (2), rapportés dans le boîtier (4) du bloc de valves et servant à loger des bobines excitatrices et des tiges-poussoirs de valve (8) qui leur sont associées, et plusieurs conduits d'agent de pression (3) qui traversent le boîtier (4) du bloc de valves et dans lesquels des éléments d'arrêt sont rapportés, caractérisé en ce qu'une pièce insérée dans le boîtier (4) du bloc de valves est constituée d'un siège de valve (2) en un alliage à mémoire de forme et en ce qu'à une température supérieure à la température d'austénite commençante, il peut se produire une fixation, sous l'action d'une force ou par complémentarité de formes, du siège de valve (2) rapporté dans le boîtier (4) du bloc de valves.

4. Bloc de valves selon au moins l'une des revendications 1 à 3 précédentes, caractérisé en ce que les pièces (1, 2, 6) comprennent un alliage à mémoire de forme de type binaire, de préférence à base de nickel et de titane.

5. Bloc de valves selon la revendication 4, caractérisé en ce que la teneur de l'alliage en nickel est au maximum égale à 50% en poids et en ce que la teneur du composé intermétalique en titane ne dépasse pas au maximum 55% en poids.

6. Bloc de valves selon la revendication 4, caractérisé en ce que l'alliage en nickel-titane des pièces (1, 2, 6) possède une hystérésis élargie, de sorte qu'après le chauffage de montage, l'alliage reste déformé d'une manière irréversible à l'état hautement résistant.

7. Bloc de valves selon l'une des revendications 1 à 5 précédentes, caractérisé en ce que les pièces (1, 2, 6) sont en un alliage de type cryogénique.

8. Bloc de valves selon l'une des revendications 1 à 3 précédentes, caractérisé en ce que les pièces (1, 2, 6) sont en un composé intermétallique tertiaire.

9. Bloc de valves selon la revendication 8, caractérisé en ce que le com posé intermétallique tertiaire des pièces (1, 2, 6) est formé d'un alliage cuivre-zinc-aluminium.
